# EUROPEAN PATENT APPLICATION

(11) **EP 2 093 987 A1**
(43) Date of publication of application: **26.08.2009**
(21) Application number: 08847234.5
(22) Date of filing: 29.10.2008
(51) Int. Cl.: H04M 3/54

(54) **METHOD, DEVICE AND SYSTEM FOR CONTROLLING MOBILE TERMINAL TO TRANSFER CALL**

(30) Priority: 30.10.2007 CN 200710164393
(71) Applicant: Huawei Technologies Co., Ltd., Longgang District, Shenzhen Guangdong 518129 (CN)
(72) Inventor: REN, Zhibin, Shenzen Guangdong 518129 (CN); LI, Guihua, Shenzen Guangdong 518129 (CN); SUN, Zhihong, Shenzen Guangdong 518129 (CN); ZHANG, Yi, Shenzen Guangdong 518129 (CN)
(74) Representative: Kreuz, Georg Maria
(86) International application number: PCT/CN2008/072866
(87) International publication number: WO 2009/059537

(57) **Abstract**

A method, apparatus, and system for controlling a mobile terminal to transfer a call are provided. The method includes these steps: an executing apparatus connects a call between a calling terminal and a first called terminal through an established conference; the executing apparatus reports a received second call message from the first called terminal to a second called terminal to a managing apparatus; the managing apparatus returns an instruction for connecting the second called terminal; the executing apparatus connects the second called terminal after receiving the instruction for connecting the second called terminal; and the managing apparatus instructs the executing apparatus to add the second called terminal to the conference after receiving an answer from the second called terminal. The system includes an executing apparatus and a managing apparatus. The apparatus includes a call connecting module, a call reporting module, a terminal connection processing module, and a conference managing module. With the present invention, an ongoing call of a mobile terminal can be transferred to another terminal on the mobile network or on the Fixed Network.

## Description

This application claims priority to Chinese Patent Application No. 200710164393.X, filed with the Chinese Patent Office on October 30, 2007 and entitled "Method, Apparatus, and System for Controlling Mobile Terminal to Transfer Call", which is incorporated herein by reference in its entirety.

### Field of the Invention

The present invention relates a mobile communication technology, and in particular, to a method, apparatus, and system for controlling a mobile terminal to transfer a call.

### Background of the Invention

In the communication field, when terminals A and B are engaged in a call, B transfers the call to terminal C if necessary, thus forming a call between A and C. This process is call transfer.

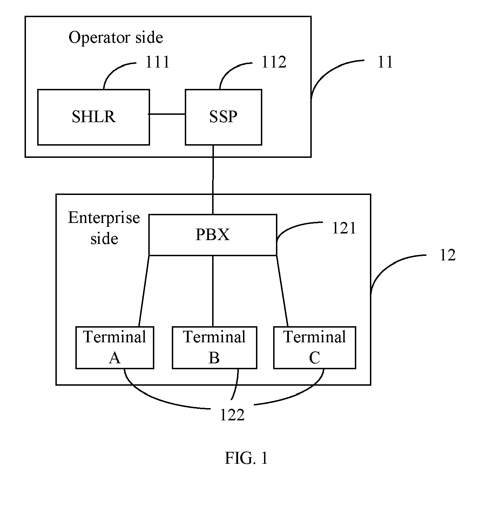

FIG. 1 shows the networking for the Fixed Network (Fixed Network) in the prior art. In FIG. 1, a Smart Home Location Register (SHLR) 111 and a Service Switching Point (SSP) 112 are on the operator side 11, and a Private Branch Exchange (PBX) 121 and terminals 122 (for example, terminals A, B, and C) are on the enterprise side 12. In the typical Fixed Network service on the network shown in FIG. 1, the method for transferring a call of a terminal is as follows:

Step A: During a conversation between A and B, a special number and a destination terminal number are entered on B. The special number, which is the digit(s) and/or the symbol(s) preset by the system, means that B wants to transfer the call between A and B to another terminal; the destination terminal number indicates a destination terminal (Assume that the destination terminal is C) to which B wants to transfer the call.

Step B: After receiving the special number and the number of C, the PBX 121 knows that B wants to transfer the ongoing call to C according to the special number. Therefore, the PBX 121 connects C during the conversation between A and B.

Step C: If C answers the call, the PBX 121 releases the call between A and B. Thus, A can start a conversation with C. The call is transferred.

Through the foregoing method, only a call between terminals on the Fixed Network can be transferred. According to this method, a mobile terminal cannot transfer an ongoing call to another terminal on the mobile network or on the Fixed Network.

### Summary of the Invention

Embodiments of the present invention provide a method, apparatus, system, and computer readable storage medium for controlling a mobile terminal to transfer a call so as to solve the problem of transferring an ongoing call of a mobile terminal to another terminal on the mobile network or on the Fixed Network.

A method for controlling a mobile terminal to transfer a call includes:

connecting, by an executing apparatus, a call between a calling terminal and a first called terminal through an established conference;

reporting, by the executing apparatus, a received second call message from the first called terminal to a second called terminal to a managing apparatus, and returning, by the managing apparatus, an instruction for connecting the second called terminal;

connecting, by the executing apparatus, the second called terminal after receiving the instruction for connecting the second called terminal; and

instructing, by the managing apparatus, the executing apparatus to add the second called terminal to the conference after receiving an answer from the second called terminal.

A system for controlling a mobile terminal to transfer a call includes:

an executing apparatus, adapted to: connect a call between a calling terminal and a first called terminal in an established conference, report a second call message from the first called terminal to a second called terminal, and connect the second called terminal after receiving an instruction for connecting the second called terminal; and

a managing apparatus, adapted to return a connection instruction to the second called terminal after receiving the second call message for calling the second called terminal from the executing apparatus, and instruct the executing apparatus to add the second called terminal to the conference after receiving an answer from the second called terminal.

An apparatus for executing call transfer for a mobile terminal includes:

a call connecting module, adapted to connect a call between a calling terminal and a first called terminal through an established conference;

a call reporting module, adapted to report a call message from the first called terminal to a second called terminal to a network after receiving a call connection event from the call connecting module;

a terminal connection processing module, adapted to: connect the second called terminal after receiving an instruction for connecting the second called terminal from the network and report a received message returned by the second called terminal to the network; and

a conference managing module, adapted to add the second called terminal to the conference according to a conference instruction returned by the network.

A computer readable storage medium includes computer program codes which are executed by a computer unit so that the computer unit is able to execute the following process:

connecting a call between a calling terminal and a first called terminal through an established conference;

reporting a received second call message from the first called terminal to a second called terminal to a managing apparatus, which returns an instruction for connecting the second called terminal;

connecting the second called terminal after receiving the instruction for connecting the second called terminal; and

instructing, by the managing apparatus, an executing apparatus to add the second called terminal to the conference after receiving an answer from the second called terminal.

According to the method and system for controlling a mobile terminal to transfer a call in the embodiments of the present invention, the calling terminal and the first called terminal first set up a call through a conference established on the executing apparatus; when a forwarded-to number is entered on the first called terminal, the ongoing conversation continues, and a call connection between the calling terminal and the second called terminal is established; after the call is transferred successfully, the first called terminal exits the call, thus forming a call between the calling terminal and the second called terminal. Thus, an ongoing call of a mobile terminal is transferred to another terminal on the mobile network or on the Fixed Network. In addition, in the embodiments of the present invention, the call transfer of a mobile terminal does not require that the existing equipment on the network should be upgraded and reconstructed, and there are no extra requirements for the mobile terminal. Therefore, the implementation cost is reduced.

### Brief Description of the Drawings

FIG. 1 shows the networking in the prior art;

FIG. 2 is a flowchart of a method for controlling a mobile terminal to transfer a call in a first embodiment of the present invention;

FIG. 3 is a flowchart of a method provided in a second embodiment of the present invention;

FIG. 4 shows a part of the flowchart of the method provided in the second embodiment of the present invention;

FIG. 5 is a flowchart of a method provided in a third embodiment of the present invention;

FIG. 6 shows a structure of a system provided in a fourth embodiment of the present invention;

FIG. 7 shows a structure of a system provided in a fifth embodiment of the present invention; and

FIG. 8 shows a structure of a system provided in a sixth embodiment of the present invention.

### Detailed Description of the embodiments

The technical solution of the present invention is hereinafter described in detail with reference to the accompanying drawings and exemplary embodiments.

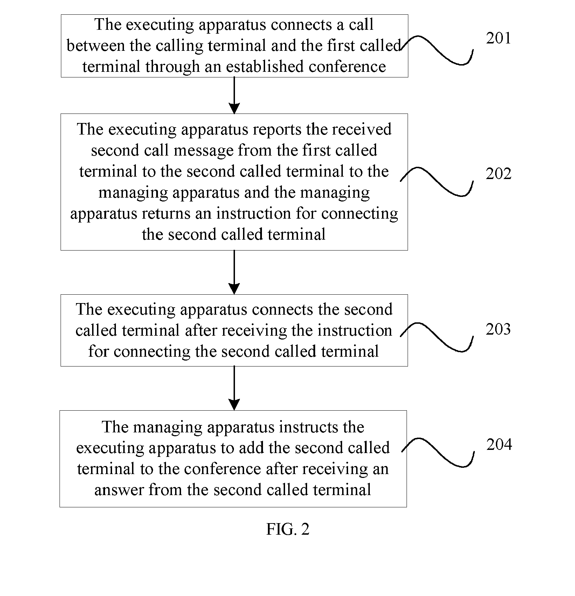

One embodiment of the present invention provides a method for controlling a mobile terminal to transfer a call. As shown in FIG. 2, the flowchart of controlling a mobile terminal to transfer a call in the first embodiment of the present invention includes the following steps:

Step 201: The executing apparatus connects a call between the calling terminal and the first called terminal through an established conference.

Step 202: The executing apparatus reports the received second call message from the first called terminal to the second called terminal to the managing apparatus. The managing apparatus returns an instruction for connecting the second called terminal.

That is, the executing apparatus reports the second call control right to the managing apparatus after receiving the second call message from the first called terminal to the second called terminal. The managing apparatus returns an instruction to the executing apparatus for connecting the second called terminal. The format of the second call message may be "special information + second called terminal information". Special information indicates that the first called terminal wants to transfer the call with the calling terminal to the second called terminal. That is, the call between the calling terminal and the first called terminal is replaced with the call between the calling terminal and the second called terminal. Special information may be digits or other characters. Second called terminal information may be the number of the second called terminal. The method for reporting the second call control right may be: sending the second call message to the managing apparatus or sending another message indicating that the first called terminal calls the second called terminal.

Step 203: After receiving the instruction for connecting the second called terminal, the executing apparatus connects the second called terminal.

The specific method for connecting the second called terminal may be as follows: A first switching apparatus calls the second called terminal after receiving the instruction for calling the second called terminal from the executing apparatus; the second called terminal returns a response, which may be an Alerting message or an off-hook message from the second called terminal, to the first switching apparatus; the executing apparatus reports the response from the second called terminal sent by the first switching apparatus to the managing apparatus. The following describes this step through an example.

When the first switching apparatus is a Terminating-Mobile Switching Center (T-MSC), the T-MSC can connect the second called terminal. Thus, a mobile terminal can transfer an ongoing call to another terminal on the mobile network.

When the first switching apparatus is a Service Switching Point (SSP), the SSP can connect the second called terminal. Thus, a mobile terminal can transfer an ongoing call to a terminal on the FIXED NETWORK.

Step 204: The managing apparatus instructs the executing apparatus to add the second called terminal to the conference after receiving an answer from the second called terminal.

That is, the managing apparatus instructs the executing apparatus to add the second called terminal to the conference and remove the first called terminal from the conference after receiving a message indicating that the second called terminal is connected from the executing apparatus. Specifically, the process of removing the first called terminal from the conference may include the following steps: The executing apparatus instructs the second switching apparatus to disconnect the first called terminal; the second switching apparatus returns a message indicating that the first called terminal is disconnected successfully to the executing apparatus after disconnecting the first called terminal.

After the first called terminal is removed from the conference, the calling terminal can start a conversation with the second called terminal. The transfer process is complete.

It should be noted that the executing apparatus in the embodiments of the present invention may be an Advanced Intelligent Peripheral & Conference Resource System (AIP&CRS); the managing apparatus may be a Computer Telephony Integration Server (CTI server); the first switching apparatus may be a T-MSC or an SSP; the second switching apparatus may be a T-MSC, and the originating mobile switching apparatus may be an Originating-Mobile Switching Center (O-MSC); the apparatuses are not limited to these network elements (NEs), and may be other NEs that provide the same functions, the same hereinafter.

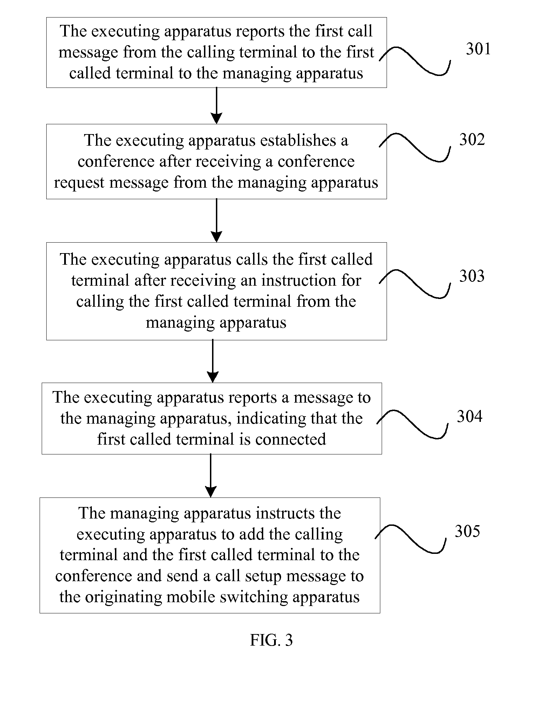

As shown in FIG. 3, the process before a conversation between the calling terminal and the first called terminal is started in a conference established on the executing apparatus (which is described in the first embodiment of the present invention) includes the following steps, which constitute the second embodiment of the present invention.

Step 301: The executing apparatus reports the first call message from the calling terminal to the first called terminal to the managing apparatus. That is, when the call from the calling terminal to the first called terminal reaches the originating mobile switching apparatus, the originating mobile switching apparatus routes the first call information from the calling terminal to the first called terminal to the executing apparatus according to the access code, and the executing apparatus reports the first call control right to the managing apparatus after receiving the first call message from the calling terminal to the first called terminal. The originating mobile switching apparatus may be the O-MSC.

Step 302: The executing apparatus establishes a conference after receiving a conference request message returned from the managing apparatus.

Step 303: The executing apparatus calls the first called terminal through the T-MSC after receiving an instruction for calling the first called terminal from the managing apparatus. The process in which the executing apparatus calls the first called terminal through the second switching apparatus T-MSC may include the following steps: The executing apparatus sends a call message for calling the first called terminal to the second switching apparatus; the first called terminal responds to the call from the second switching apparatus after the second switching apparatus calls the first called terminal; the second switching apparatus sends the response from the first called terminal to the executing apparatus. The response from the first called terminal may be an Alerting message or an off-hook message from the first called terminal.

Step 304: The executing apparatus reports a message to the managing apparatus, indicating that the first called terminal is connected.

Step 305: The managing apparatus instructs the executing apparatus to add the calling terminal and the first called terminal to the conference and send a call setup message to the originating mobile switching apparatus. Then, the calling terminal can start a conversation with the first called terminal.

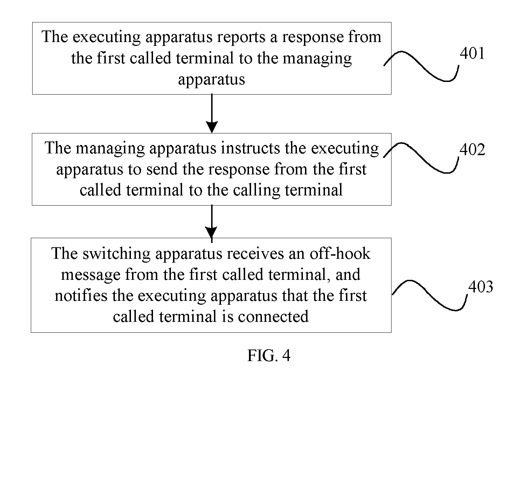

As shown in FIG. 4, the process from the time of calling the first called terminal to the time of reporting a message indicating that the first called terminal is connected may further include the following steps:

Step 401: The executing apparatus reports the response received from the first called terminal to the managing apparatus. The response may be an Alerting message or an off-hook message from the first called terminal.

Step 402: The managing apparatus instructs the executing apparatus to send the response from the first called terminal to the calling terminal. Specifically, the process of sending the response from the first called terminal to the calling terminal may include the following steps: The executing apparatus sends the response from the first called terminal to the originating mobile switching apparatus; the originating mobile switching apparatus connects a voice channel between the calling terminal and the first called terminal. In this case, the calling terminal knows that the first called terminal has responded (maybe the calling terminal hears the ringing of the first called terminal).

Step 403: The second switching apparatus receives an off-hook message from the first called terminal, and notifies the executing apparatus that the first called terminal is connected.

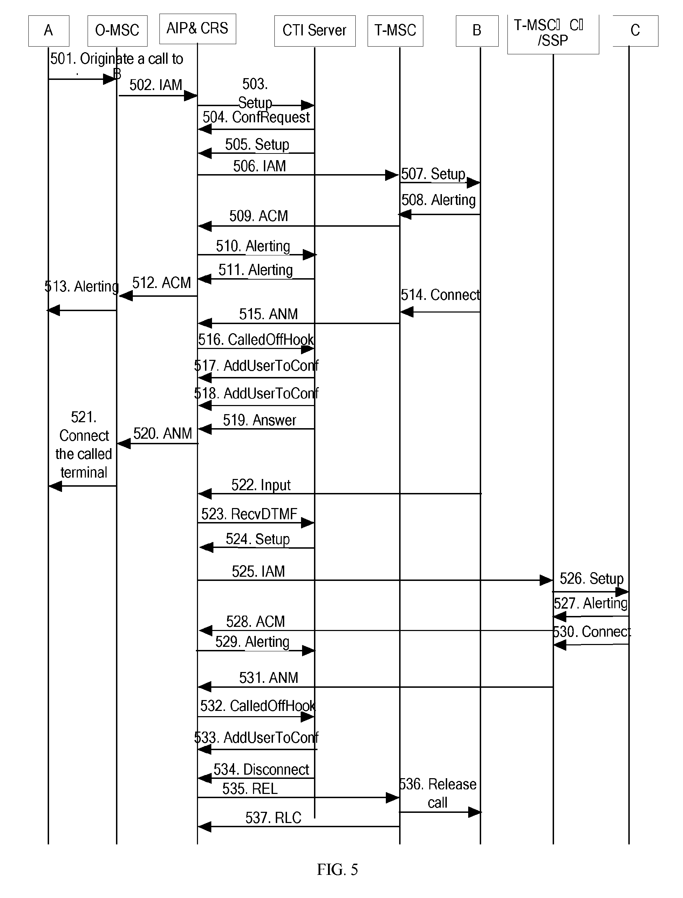

FIG. 5 shows the flowchart of the third embodiment of the present invention. In this embodiment, the executing apparatus is an AIP&CRS; the managing apparatus is a CTI server; the first switching apparatus is a T-MSC (C) or an SSP; the second switching apparatus is a T-MSC; the originating mobile switching apparatus is an O-MSC; but these apparatuses are not limited to these NEs. The third embodiment of the present invention includes:

Step 501: The calling terminal A calls the first called terminal B. That is, A sends the access code and the number of B to the O-MSC.

Step 502: The O-MSC sends an Initial Address Message (IAM) through SS7, and routes the call of A to the AIP&CRS according to the access code.

Step 503: The AIP&CRS sends a Setup message to the CTI server through TCP/IP to report the call control right to the CTI server.

Step 504: The CTI server sends a ConfRequest message through TCP/IP to the AIP&CRS to request to establish a conference on the AIP&CRS.

Step 505: The CTI server sends the Setup message to the AIP&CRS through TCP/IP to instruct the AIP&CRS to call B.

Step 506: The AIP&CRS sends the IAM message to the T-MSC through SS7 to instruct the T-MSC to call B.

Step 507: The T-MSC sends the Setup message to B through SS7 to call B.

Step 508: B rings, and returns an Alerting message to the T-MSC through SS7.

Step 509: After receiving the Alerting message through SS7, the T-MSC returns an ACM message to the AIP&CRS through SS7 to notify the AIP&CRS of the ringing of B.

Step 510: After receiving the ACM message through SS7, the AIP&CRS reports the ringing event of B to the CTI server via the Alerting message through TCP/IP.

Step 511: The CTI server instructs the AIP&CRS to send the ringing information of B to A via the Alerting message through TCP/IP.

Step 512: The AIP&CRS returns the ACM message to the O-MSC through SS7 to instruct the O-MSC to set up a voice channel between A and B.

Step 513: The O-MSC sets up the voice channel between A and B. Then, A can hear the ringing of B.

Step 514: After B goes off-hook, B returns a Connect message to the T-MSC through SS7, indicating that B is connected.

Step 515: The T-MSC sends an ANM message to the AIP&CRS through SS7, indicating that B goes off-hook.

Step 516: The AIP&CRS sends a CalledOff Hook message to the CTI server through TCP/IP, indicating that B goes off-hook.

Step 517: The CTI server sends an AddUserToConf message to the AIP&CRS through TCP/IP to instruct the AIP&CRS to add B to the conference.

Step 518: The CTI server sends an AddUserToConf message to the AIP&CRS through TCP/IP to instruct the AIP&CRS to add A to the conference.

Step 519: The CTI server sends an Answer message to the AIP&CRS through TCP/IP to instruct the AIP&CRS to send an ANM message to the O-MSC through SS7 to require call setup.

Step 520: The AIP&CRS sends the ANM message to the O-MSC through SS7.

Step 521: The O-MSC sends the connection event of B to A. Then, A can start a conversation with B. Thus, A and B can have a conversation in the conference established on the AIP&CRS.

Step 522: B wants to transfer the call to the second called terminal C during the conversation. The symbol indicating the transfer operation and the number of C are entered on B.

Step 523: After receiving the symbol from B, the AIP&CRS reports the symbol to the CTI server via a DecvDTMF message through TCP/IP.

Step 524: The CTI server sends the Setup message to the AIP&CRS through TCP/IP to instruct the AIP&CRS to connect C.

Step 525: The AIP&CRS sends an IAM message to the T-MSC(C) or SSP that is connected to C through SS7, and the IAM message carries the number of C.

Step 526: The T-MSC(C) or SSP sends a Setup message to C through SS7 to call C.

Step 527: C rings and returns an Alerting message to the T-MSC(C) or SSP through SS7.

Step 528: The T-MSC(C) or SSP returns an ACM message to the AIP&CRS through SS7 to notify the AIP&CRS of the ringing of C.

Step 529: After receiving the ACM message through SS7, the AIP&CRS reports the ringing event of C to the CTI server via the Alerting message through TCP/IP.

Step 530: After C goes off-hook, C returns a Connect message to the T-MSC(C) or SSP through SS7 to notify the T-MSC(C) or SSP of the off-hook of C.

Step 531: The T-MSC(C) or SSP returns an ANM message to the AIP&CRS through SS7 to notify the AIP&CRS of the off-hook of C.

Step 532: The AIP&CRS sends a CalledOffHook message to the CTI server through TCP/IP to report a connection event of C.

Step 533: The CTI server sends a ServerAddUserToConf message to the AIP&CRS through TCP/IP to instruct the AIP&CRS to add C to the conference.

Step 534: The CTI server sends a Disconnect message to the AIP&CRS through TCP/IP to instruct the AIP&CRS to remove B from the conference.

Step 535: The AIP&CRS sends a Release (REL) message to the T-MSC through SS7 to disconnect B.

Step 536: The T-MSC sends the REL message to B through SS7 to disconnect B.

Step 537: The T-MSC returns an RLC message to the AIP&CRS through SS7 to notify successful disconnection.

Thus, A can start a conversation with C. The transfer process is complete.

In the method for controlling a mobile terminal to transfer a call in the embodiments of the present invention, the calling terminal starts a conversation with the first called terminal through a conference established on the executing apparatus; the ongoing call continues when a forwarded-to number is entered on the first called terminal; a call connection between the calling terminal and the second called terminal is established at the same time; the first called terminal exits the conversation after successful call transfer, and the call between the calling terminal and the second called terminal is formed. Thus, an ongoing call of a mobile terminal is transferred to another terminal on the mobile network or on the Fixed Network. In addition, in the embodiments of the present invention, the call transfer of a mobile terminal does not require that the existing equipment on the network should be upgraded and reconstructed, and there are no extra requirements for the mobile terminal. Therefore, the implementation cost is low.

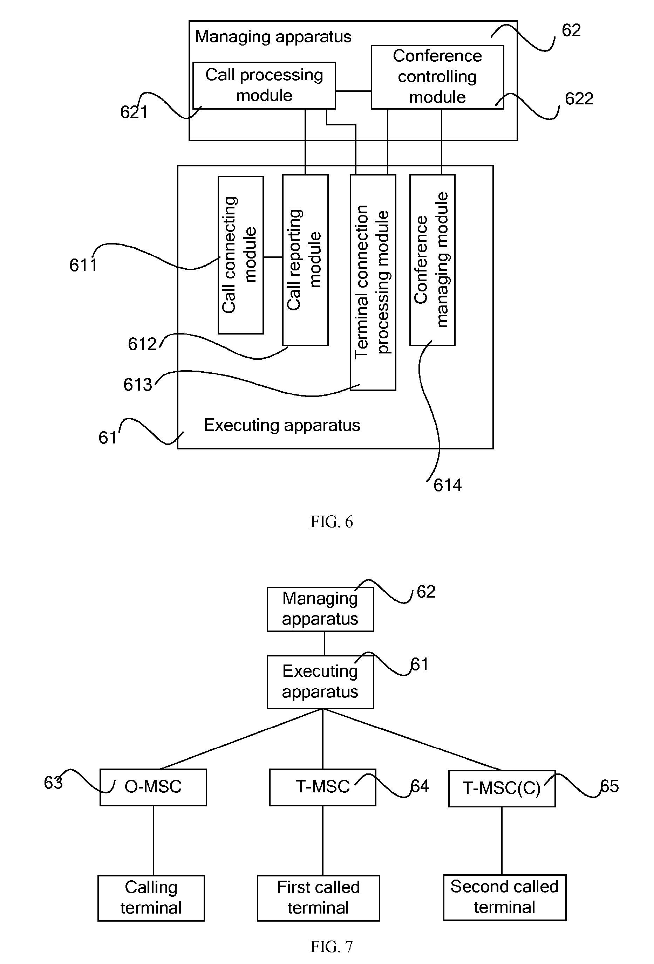

The fourth embodiment of the present invention provides a system for controlling a mobile terminal to transfer a call. As shown in FIG. 6, the system includes an executing apparatus 61 and a managing apparatus 62. The executing apparatus 61 is adapted to: connect a call between the calling terminal and the first called terminal through an established conference, report the second call message from the first called terminal to the second called terminal, and connect the second called terminal after receiving an instruction for connecting the second called terminal. The managing apparatus 62 is adapted to: return a connection instruction to the second called terminal after receiving the second call message for calling the second called terminal from the executing apparatus 61, and instruct the executing apparatus 61 to add the second called terminal to the conference after receiving an answer from the second called terminal.

Preferably, the system further includes a first switching apparatus and a second switching apparatus. The first switching apparatus is adapted to: receive an instruction for calling the second called terminal from the executing apparatus 61, call the second called terminal according to the instruction, and send a response from the second called terminal to the executing apparatus.

The second switching apparatus is adapted to: receive an instruction from the executing apparatus for disconnecting the first called terminal, disconnect the first called terminal according to the instruction, and notify the executing apparatus of successful disconnection.

The executing apparatus 61 includes a call connecting module 611, a call reporting module 612, a terminal connection processing module 613, and a conference managing module 614. The call connecting module 611 is adapted to connect a call between the calling terminal and the first called terminal through an established conference. The call reporting module 612 is adapted to report a call message from the first called terminal to the second called terminal to the managing apparatus after receiving a call connection event from the call connecting module. The terminal connection processing module 613 is adapted to connect the second called terminal after receiving an instruction for connecting the second called terminal from the managing apparatus and report a received message returned by the second called terminal to the managing apparatus. The conference managing module 614 is adapted to add the second called terminal to the conference according to a conference instruction returned by the managing apparatus.

Preferably, the executing apparatus 61 further includes an instructing module 615 and a terminal disconnection controlling module 616. The instructing module 615 is adapted to instruct the first called terminal to exit the conference; the terminal disconnection controlling module 616 is adapted to send a request for disconnecting the first called terminal and receive a message indicating that the first called terminal is disconnected successfully.

The managing apparatus 62 includes a call processing module 621 and a conference controlling module 622. The call processing module 621 is adapted to send a connection instruction to the second called terminal after receiving a call message from the first called terminal to the second called terminal sent by the call reporting module 612; for example, the call processing module 621 may instruct the terminal connection processing module 613 to connect the second called terminal via a Setup message through TCP/IP; the conference controlling module 622 is adapted to send an instruction for adding the second called terminal to the conference to the conference managing module 614 after receiving a response from the second called terminal; if the response from the second called terminal is a message indicating that the called terminal goes off-hook, the conference managing module 614 may send a ServerAddUserToConf message through TCP/IP to instruct the conference controlling module 622 to add the second called terminal to the conference and send a Disconnect message through TCP/IP to remove the first called terminal from the conference.

In this embodiment, the managing apparatus 62 is adapted to control the executing apparatus 61 to transfer a call. The detailed transfer process is as follows:

When the calling terminal starts a conversation with the first called terminal via the call connecting module 611 in an established conference, the first called terminal wants to transfer the call to the second called terminal; after the call is connected, the call reporting module 612 reports a call message from the first called terminal to the second called terminal to the managing apparatus 62. The call message may carry the symbol indicating the transfer operation and the number of the second called terminal. For example, the call reporting module 612 may send a Setup message to the managing apparatus 62 through TCP/IP to report the call control right.

The terminal connection processing module 613 connects the second called terminal after receiving an instruction for connecting the second called terminal from the managing apparatus 62 and reports the received message returned by the second called terminal to the managing apparatus 62; the managing apparatus 62 may instruct the terminal connection processing module 613 to connect the second called terminal via a Setup message through TCP/IP; the terminal connection processing module 613 reports an Alerting message through TCP/IP to the managing apparatus 62 after receiving an ACM message through SS7, indicating that the second called terminal rings; the terminal connection processing module 613 sends a CalledOffHook message to the managing apparatus 62 through TCP/IP after receiving an ANM message through SS7, indicating that the second called terminal goes off-hook.

The conference controlling module 622 instructs the conference managing module 614 to add the second called terminal to the conference according to a ServerAddUserToConf message through TCP/IP sent by the CTI server. After the conversation is complete, the managing apparatus 62 sends a Disconnect message to the instructing module 615 through TCP/IP; the instructing module 615 instructs the first called terminal to exit the conference according to the received instruction.

The terminal disconnection controlling module 616 is adapted to send an REL message through SS7 to disconnect the first called terminal and receive a message indicating that the first called terminal is disconnected successfully. The terminal disconnection controlling module 616 may also send an REL message through SS7 to disconnect the second called terminal and receive an RLC message through SS7 to know that the second called terminal is disconnected successfully.

The transfer process is complete. That is, the call between the calling terminal and the first called terminal in the conference on the executing apparatus 61 is replaced with the call between the calling terminal and the second called terminal in the conference on the executing apparatus 61.

As shown in FIG. 7, in the fifth embodiment of the present invention, the system that includes the executing apparatus 61 and the managing apparatus 62 based on the fourth embodiment further includes a T-MSC 64, a T-MSC(C) 65, and an O-MSC 63, where the second called terminal is connected to the T-MSC(C) 65. In this embodiment, a mobile terminal is able to transfer an ongoing call to another terminal on the mobile network. The O-MSC 63 is adapted to route a call from the calling terminal to the first called terminal to the executing apparatus 61 and enable the calling terminal to start a conversation with the first called terminal after receiving a call setup message. The T-MSC 64 receives a call message from the first called terminal to the second called terminal and forwards the call message to the executing apparatus 61; after receiving a message for connecting the second called terminal, the T-MSC(C) 65 connects the second called terminal and forwards a message returned by the second called terminal to the executing apparatus 61; the T-MSC(C) 65 may send a Setup message to the second called terminal through SS7 to call the second called terminal, return an ACM message to the executing apparatus 61 through SS7 to notify the executing apparatus 61 of the ringing of the second called terminal, and return an ANM message to the executing apparatus 61 through SS7 to notify the executing apparatus 61 of the off-hook of the second called terminal; after receiving a request sent by the executing apparatus 61 for disconnecting the first called terminal, the T-MSC 64 disconnects the first called terminal; the T-MSC 64 may send an REL message to the first called terminal through SS7 to disconnect the first called terminal and return an RLC message to the executing apparatus 61 through SS7 to notify that the first called terminal is disconnected successfully.

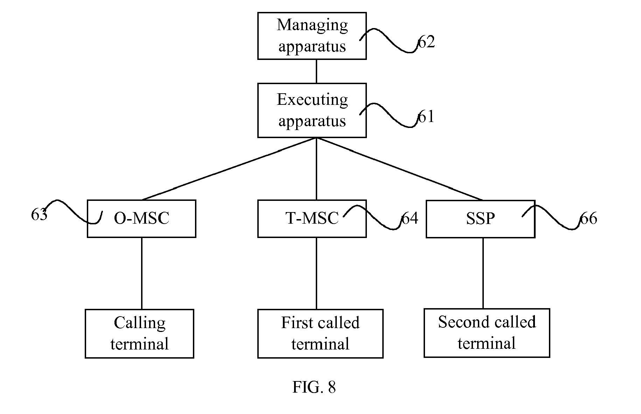

As shown in FIG. 8, in the sixth embodiment of the present invention, the system that includes the executing apparatus 61 and the managing apparatus 62 based on the fourth embodiment further includes an O-MSC 63, a T-MSC 64, and an SSP 66. In this embodiment, a mobile terminal is able to transfer an ongoing call to a terminal on the Fixed Network. The O-MSC 63 is adapted to route a call from the calling terminal to the first called terminal to the executing apparatus 61 and enable the calling terminal to start a conversation with the first called terminal after receiving a call setup message. The T-MSC 64 is adapted to send a call message from the first called terminal to the second called terminal to the executing apparatus 61 and disconnect the first called terminal. The SSP 66 is adapted to connect the second called terminal according to an instruction sent by the executing apparatus 61. The T-MSC 64 receives a call message from the first called terminal to the second called terminal and forwards the call message to the executing apparatus 61; after receiving a message for connecting the second called terminal, the SSP 66 connects the second called terminal and forwards a message returned by the second called terminal to the executing apparatus 61; the SSP 66 may send a Setup message to the second called terminal through SS7 to call the second called terminal, return an ACM message to the executing apparatus 61 through SS7 to notify the executing apparatus 61 of the ringing of the second called terminal, and return an ANM message to the executing apparatus 61 through SS7 to notify the executing apparatus 61 of the off-hook of the second called terminal; after receiving a request sent by the executing apparatus 61 for disconnecting the first called terminal, the T-MSC 64 disconnects the first called terminal; the T-MSC 64 may send an REL message to the first called terminal through SS7 to disconnect the first called terminal and return an RLC message to the executing apparatus 61 through SS7 to notify that the first called terminal is disconnected successfully.

In this embodiment, the executing apparatus may be an AIP&CRS and the managing apparatus may be a CTI server.

In the system for controlling a mobile terminal to transfer a call in the embodiments of the present invention, a conference is established on the executing apparatus 61 so that the calling terminal starts a conversation with the first called terminal; when the call reporting module 621 reports a call of the first called terminal, the ongoing call continues, and the managing apparatus 62 sends an instruction for establishing a call connection between the calling terminal and the second called terminal; the first called terminal is removed from the conversation after successful transfer, and a call between the calling terminal and the second called terminal is formed; thus, an ongoing call of a mobile terminal is transferred to another terminal on the mobile network or on the Fixed Network. In addition, in the embodiments of the present invention, the call transfer of a mobile terminal does not require that the existing equipment on the network should be upgraded and reconstructed, and there are no extra requirements for the mobile terminal. Therefore, the implementation cost is low.

In addition, an embodiment of the present invention further provides an apparatus for executing call transfer for a mobile terminal. The apparatus includes a call connecting module, a call reporting module, a terminal connection processing module, and a conference managing module. The call connecting module is adapted to connect a call between the calling terminal and the first called terminal in an established conference; the call reporting module is adapted to report a call message from the first called terminal to the second called terminal to the network after receiving a call connection event sent by the call connecting module; the terminal connection processing module is adapted to connect the second called terminal after receiving an instruction for connecting the second called terminal from the network and report a received message returned by the second called terminal to the network; the conference managing module is adapted to add the second called terminal to the conference according to a conference instruction returned by the network.

Preferably, the executing apparatus further includes an instructing module and a terminal disconnection controlling module. The instructing module is adapted to instruct the first called terminal to exit the conference; the terminal disconnection controlling module is adapted to send a request for disconnecting the first called terminal and receive a message indicating that the first called terminal is disconnected successfully.

The functions of the modules in the apparatus have been described in the foregoing embodiments of the present invention.

It is understandable that all or part of the steps in the foregoing embodiments may be implemented through hardware instructed by programs. The programs may be stored in a storage medium, such as a Read-Only Memory/Random Access Memory (ROM/RAM), a magnetic disk, and a compact disk.

Although the invention has been described through exemplary embodiments, the invention is not limited to such embodiments. It is apparent that those skilled in the art can make various modifications and variations to the invention without departing from the spirit and scope of the present invention. The invention is intended to cover the modifications and variations provided that they fall in the scope of protection defined by the following claims or their equivalents.

## Claims

1. A method for controlling a mobile terminal to transfer a call, comprising:
connecting, by an executing apparatus, a call between a calling terminal and a first called terminal through an established conference;
reporting, by the executing apparatus, a received second call message from the first called terminal to a second called terminal to a managing apparatus, and returning, by the managing apparatus, an instruction for connecting the second called terminal;
connecting, by the executing apparatus, the second called terminal after receiving the instruction for connecting the second called terminal; and
instructing, by the managing apparatus, the executing apparatus to add the second called terminal to the conference after receiving an answer from the second called terminal.

2. The method of claim 1, wherein after the step of adding the second called terminal to the conference, the method further comprises: removing the first called terminal from the conference and disconnecting the first called terminal.

3. The method of claim 1, wherein the step of connecting the second called terminal comprises:
sending, by the executing apparatus, an instruction for calling the second called terminal to a first switching apparatus;
by the first switching apparatus, calling the second called terminal according to the instruction for calling the second called terminal, and sending a response returned by the second called terminal to the executing apparatus; and
reporting, by the executing apparatus, the response from the second called terminal sent by the first switching apparatus to the managing apparatus.

4. The method of claim 2, wherein the step of disconnecting the first called terminal comprises:
instructing, by the executing apparatus, a second switching apparatus to disconnect the first called terminal; and
by the second switching apparatus, disconnecting the first called terminal and notifying the executing apparatus of successful disconnection.

5. The method of claim 1, 2, or 3, wherein before the calling terminal starts a conversation with the first called terminal through the conference established on the executing apparatus, the method further comprises:
reporting, by the executing apparatus, a received first call message from the calling terminal to the first called terminal to the managing apparatus;
establishing, by the executing apparatus, the conference after receiving a conference request message from the managing apparatus;
calling, by the executing apparatus, the first called terminal after receiving an instruction for calling the first called terminal from the managing apparatus;
reporting, by the executing apparatus, a message to the managing apparatus, indicating that the first called terminal is connected; and
instructing, by the managing apparatus, the executing apparatus to add the calling terminal and the first called terminal to the conference and send a call setup message to the first called terminal.

6. The method of claim 5, wherein from the time of calling the first called terminal to the time of reporting the message indicating that the first called terminal is connected, the method further comprises:
reporting, by the executing apparatus, a response from the first called terminal to the managing apparatus;
instructing, by the managing apparatus, the executing apparatus to send the response from the first called terminal to the calling terminal; and
by the second switching apparatus, receiving an off-hook message from the first called terminal, and notifying the executing apparatus that the first called terminal is connected.

7. The method of claim 5, wherein the step of calling the first called terminal comprises:
sending, by the executing apparatus, a message for calling the first called terminal to the second switching apparatus;
responding, by the first called terminal, to the call of the second switching apparatus after the second switching apparatus calls the first called terminal; and
sending, by the second switching apparatus, a response from the first called terminal to the executing apparatus.

8. The method of claim 6, wherein the step of sending the response from the first called terminal to the calling terminal comprises:
sending, by the executing apparatus, the response from the first called terminal to an originating mobile switching apparatus; and
connecting, by the originating mobile switching apparatus, a voice channel between the calling terminal and the first called terminal.

9. A system for controlling a mobile terminal to transfer a call, comprising:
an executing apparatus, adapted to connect a call between a calling terminal and a first called terminal in an established conference, report a second call message from the first called terminal to a second called terminal, and connect the second called terminal after receiving an instruction for connecting the second called terminal; and
a managing apparatus, adapted to return a connection instruction to the second called terminal after receiving the second call message for calling the second called terminal from the executing apparatus, and instruct the executing apparatus to add the second called terminal to the conference after receiving answer from the second called terminal.

10. The system of claim 9, wherein the executing apparatus comprises:
a call connecting module, adapted to connect the call between the calling terminal and the first called terminal through the established conference;
a call reporting module, adapted to report a call message from the first called terminal to the second called terminal to the managing apparatus after receiving a call connection event from the call connecting module;
a terminal connection processing module, adapted to: connect the second called terminal after receiving the instruction for connecting the second called terminal from the managing apparatus and report a received message returned by the second called terminal to the managing apparatus; and
a conference managing module, adapted to add the second called terminal to the conference according to a conference instruction returned by the managing apparatus.

11. The system of claim 10, wherein the executing apparatus further comprises:
an instructing module, adapted to instruct the first called terminal to exit the conference; and
a terminal disconnection controlling module, adapted to send a request for disconnecting the first called terminal and receive a message indicating that the first called terminal is disconnected successfully.

12. The system of claim 9, wherein the managing apparatus comprises:
a call processing module, adapted to send a connection instruction to the second called terminal after receiving a call message from the first called terminal to the second called terminal sent by the call reporting module; and
a conference controlling module, adapted to send an instruction for adding the second called terminal to the conference to the management module after receiving a response from the second called terminal.

13. The system of claim 9, further comprising at least one of the following:
a first switching apparatus, adapted to: receive the instruction for calling the second called terminal from the executing apparatus, call the second called terminal according to the instruction, and send a response from the second called terminal to the executing apparatus; and
a second switching apparatus, adapted to: receive an instruction sent by the executing apparatus for disconnecting the first called terminal, disconnect the first called terminal, and notify the executing apparatus of successful disconnection.

14. An apparatus for executing call transfer for a mobile terminal, comprising:
a call connecting module, adapted to connect a call between a calling terminal and a first called terminal through an established conference;
a call reporting module, adapted to report a call message from the first called terminal to a second called terminal to a network after receiving a call connection event from the call connecting module;
a terminal connection processing module, adapted to: connect the second called terminal after receiving an instruction for connecting the second called terminal from the network and report a received message returned by the second called terminal to the network; and
a conference managing module, adapted to add the second called terminal to the conference according to a conference instruction returned by the network.

15. The apparatus of claim 14, further comprising:
an instructing module, adapted to instruct the first called terminal to exit the conference; and
a terminal disconnection controlling module, adapted to: send a request for disconnecting the first called terminal and receive a message indicating that the first called terminal is disconnected successfully.

16. A computer readable storage medium, comprising computer program codes which executed by a computer unit, the computer unit to perform the following steps:
connecting a call between a calling terminal and a first called terminal through an established conference;
reporting a received second call message from the first called terminal to a second called terminal to a managing apparatus, which returns an instruction for connecting the second called terminal;
connecting the second called terminal after receiving the instruction for connecting the second called terminal; and
instructing, by the managing apparatus, the executing apparatus to add the second called terminal to the conference after receiving an answer from the second called terminal.
